# EUROPÄISCHE PATENTANMELDUNG

(11) **EP 3 203 342 A2**
(43) Veröffentlichungstag der Anmeldung: **09.08.2017**
(21) Anmeldenummer: 17154317.6
(22) Anmeldetag: 02.02.2017
(51) Int. Cl.: G05D 1/02

(54) **ANDOCKSTATION FÜR MOBILE ROBOTER SOWIE VERFAHREN ZUM BETREIBEN EINES MOBILEN ROBOTERS**

(30) Priorität: 02.02.2016 DE 102016201530
(71) Anmelder: Deutsches Zentrum für Luft- und Raumfahrt e.V., 51147 Köln (DE)
(72) Erfinder: Wüsthoff, Tilo, 81379 München (DE); Weitschat, Roman, 81373 München (DE)
(74) Vertreter: dompatent von Kreisler Selting Werner - Partnerschaft von Patent- und Rechtsanwälten mbB

(57) **Zusammenfassung**

Die Erfindung betrifft eine Andockstation (10) für mobile Roboter (12), wobei die Andockstation (10) mindestens ein Befestigungselement (14, 14a - 14d) zum Befestigen der Andockstation (10) an einer Arbeitsstation (16) und ein lösbares Fixierelement (18) zum Fixieren des mobilen Roboters (12) an der Andockstation (10) und damit an der Arbeitsstation (16) aufweist. Die Erfindung betrifft ferner ein Verfahren zum Betreiben eines mobilen Roboters.

## Beschreibung

Die Erfindung betrifft eine Andockstation für mobile Roboter sowie ein Verfahren zum Betreiben eines mobilen Roboters.

Andockstationen für mobile Roboter sind beispielsweise zum Laden von Haushaltsrobotern, wie zum Beispiel von Staubsauger-Robotern oder Rasenmäher-Robotern bekannt (siehe EP 2 073 088 A2 und EP 1 721 279 B1).

Insbesondere aus der Industrie oder der Medizintechnik sind mobile Roboter bekannt, bei denen es sehr wichtig ist, dass sie einen stabilen Stand aufweisen und ferner ihre Position, insbesondere relativ zu einem zu bearbeitenden Objekt, genau bekannt ist. Hierzu müssen solche mobile Roboter aufwändig kalibriert/ registriert werden.

Hierzu weisen aus dem Stand der Technik bekannte mobile Roboter sehr große Abmessungen auf, damit ein stabiler Stand gewährleistet ist.

Aufgabe der Erfindung ist es, eine Vorrichtung bereitzustellen, mit Hilfe der ein kompakterer mobiler Roboter zuverlässig betrieben werden kann. Ferner ist es

Aufgabe der Erfindung ein entsprechendes Verfahren zum Betreiben eines mobilen Roboters bereitzustellen.

Die Lösung der Aufgabe erfolgt erfindungsgemäß durch die Merkmale der Ansprüche 1 und 6.

Die erfindungsgemäße Andockstation für mobile Roboter weist mindestens ein Befestigungselement zum Befestigen der Andockstation an einer Arbeitsstation auf. Bei der Arbeitsstation kann es sich beispielsweise um eine Werkbank oder eine Arbeitsplatte handeln, auf der zu bearbeitende Objekte angeordnet sind. Mit Hilfe des mindestens einen Befestigungselements kann die Andockstation sicher an dieser Arbeitsstation befestigt werden, so dass sie relativ zu dieser nicht beweglich ist. Bei dem Befestigungselement kann es sich beispielsweise um Schrauben handeln, mit denen die Andockstation an der Arbeitsstation festgeschraubt werden kann.

Die erfindungsgemäße Andockstation weist ferner ein lösbares Fixierelement zum lösbaren Fixieren des mobilen Roboters an der Andockstation und damit an der Arbeitsstation auf. Hierdurch kann eine stabile mechanische Verbindung zwischen dem mobilen Roboter über die Andockstation bis hin zur Arbeitsstation gewährleistet werden. Das Fixieren des mobilen Roboters an der Andockstation kann durch eine mechanische oder magnetische Verbindung erfolgen. Beispielsweise kann durch das Ineinandergreifen von Zähnen eine Fixierung ermöglicht werden (mechanische Verbindung). Alternativ können zwei Elemente durch Magneten miteinander verbunden werden. Es ist bevorzugt, dass eine Fixierung in allen sechs Freiheitsgeraden erfolgt. Die Fixierung erfolgt bevorzugt wie in den folgenden Veröffentlichungen beschrieben:
DE 20 2013 001 658 U1
EP 1 464 426 A2
DE 102004004543 B4

Es ist bevorzugt, dass der mobile Roboter nach seinem Fixieren an der Andockstation relativ zur Arbeitsstation nicht mehr bewegbar ist. Sofern der Roboter beispielsweise bewegliche Roboterarme aufweist, sind diese selbstverständlich auch in dieser Situation relativ zur Arbeitsstation bewegbar. Allerdings ist nach einem Fixieren des mobilen Roboters an der Andockstation ein Basiselement des mobilen Roboters relativ zur Arbeitsstation nicht mehr beweglich. Durch das lösbare Fixierelement kann somit eine erhöhte Steifigkeit des mit der Andockstation verbundenen mobilen Roboters erreicht werden, ohne dass dieser besonders große Abmessungen aufweisen müsste um diese Stabilität von sich aus zu erreichen. Es ist somit möglich, den mobilen Roboter besonders klein auszubilden.

In einer bevorzugten Ausführungsform weist die Andockstation eine Datenschnittstelle zum Übertragen von Daten von der Andockstation an den mobilen Roboter auf. Hierbei kann es sich beispielsweise um Daten bzw. Informationen aus dem erwählten System der Arbeitsstation handeln. Weiterhin kann es sich um Sensordaten handeln, die der mobile Roboter für seinen Betrieb benötigt.

In einer weiteren Ausführungsform weist die Andockstation eine Energiezuführvorrichtung zum Zuführen insbesondere elektrischer Energie zum mobilen Roboter auf. Hierdurch kann der mobile Roboter einerseits betrieben werden, solange er mit der Andockstation verbunden ist. Anderseits kann sein interner Akku aufgeladen werden.

Es ist weiterhin bevorzugt, dass die Arbeitsstation Sensoren aufweist, deren Sensordaten insbesondere über die Andockstation an den mobilen Roboter übermittelbar sind.

Die Erfindung betrifft ferner ein Verfahren zum Betreiben eines mobilen Roboters mit den folgenden Schritten:
Der mobile Roboter wird an einer Andockstation fixiert oder angedockt, die wiederum an einer Arbeitsstation befestigt ist. Die Andockstation ist gemäß den bisher beschriebenen Ausführungsformen ausgestaltet.

Es ist bevorzugt, dass das Verfahren die folgenden zusätzlichen Schritte aufweist: Es werden Sensordaten durch an der Arbeitsstation angeordnete Sensoren erfasst. Dieser werden insbesondere über die Andockstation an den mobilen Roboter übermittelt.

Weiterhin weist das Verfahren bevorzugt den folgenden zusätzlichen Schritt auf:
Es werden Informationen über das Weltmodell der Arbeitsstation insbesondere über die Andockstation an den mobilen Roboter übertragen.

Bei diesen Informationen kann es sich um die kartesische Position der Arbeitsstation, die kartesische Position eines zu bearbeitenden Objekts und/ oder die kartesische Position von Hindernissen handeln, die der Roboter umfahren muss. Allgemeiner ausgedrückt, kann es sich um Informationen handeln, die dem mobilen Roboter selbst nicht zur Verfügung stehen und die dieser für seinen Betrieb benötigt. Der mobile Roboter kann somit ohne bzw. mit weniger Sensoren ausgestattet werden, da ihm die benötigten Sensorinformationen oder andere Informationen von der Arbeitsstation übermittelt werden. Bei den übermittelten Informationen kann es sich ferner um sicherheitsrelevante Informationen handeln, die beispielsweise Informationen darüber enthalten, in welchem Teil des Arbeitsbereichs des mobilen Roboters Menschen vorhanden sein können, so dass sich der Roboter in diesem Bereich nur mit einer limitierten Geschwindigkeit bewegen kann. Weiterhin können Informationen über die Position und/oder Orientierung von Bauteilen und/oder Werkstücken übertragen werden, die durch den mobilen Roboter bearbeitet werden sollen.

Allgemein ausgedrückt handelt es sich bei den übertragenen Informationen um betriebsrelevante Informationen, die für die Erfüllung der jeweiligen Aufgabe des mobilen Roboters notwendig sind. Je nach Art der zu erfüllenden Aufgabe können sich diese Informationen über die Zeit unterscheiden oder aber auch von Arbeitsstation zu Arbeitsstation unterschiedlich sein. Es ist somit möglich, den mobilen Roboter relativ simpel auszugestalten, so dass ihm die für die jeweilige Aufgabe notwendigen Informationen nicht zur Verfügung stehen. Diese werden ihm erst beim Andocken an die jeweilige Arbeitsstation über die Andockstation übermittelt.

Im Folgenden werden bevorzugte Ausführungsformen der Erfindung anhand von Figuren erläutert.

Es zeigen:
- Figuren 1a und 1b: zwei Ansichten einer Ausführungsform der erfindungsgemäßen Andockvorrichtung,
- Figur 2: einen mobilen Roboter,
- Figuren 3a und 3b: zwei Ansichten einer Arbeitsstation, und
- Figuren 4a und 4b: einen mobilen Roboter beim Andocken an die Andockstation.

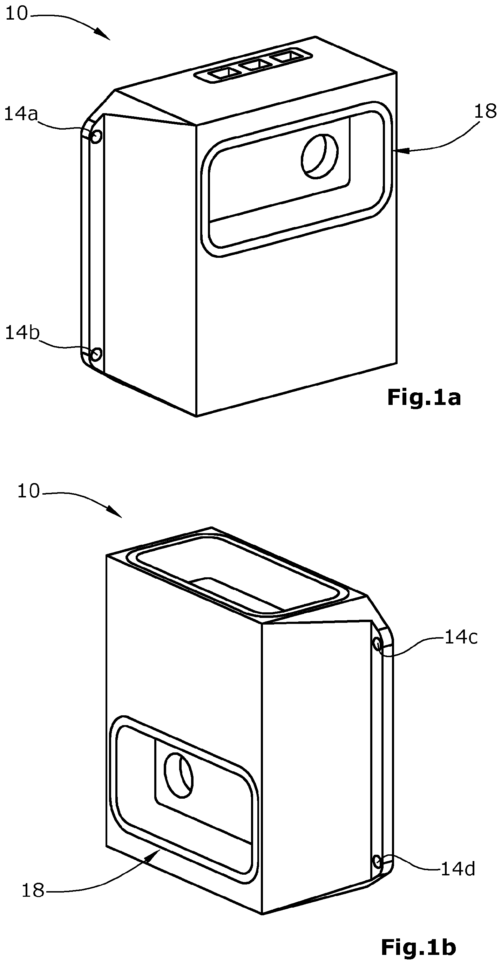

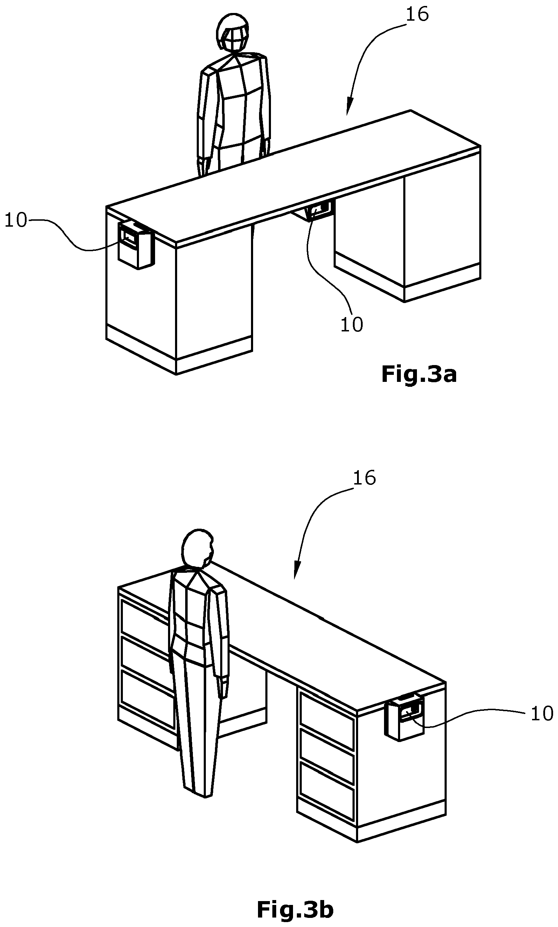

Die Andockstation 10 gemäß Figuren 1a und 1b weist vier Befestigungselement 14a bis 14d auf, bei denen es sich um Löcher handelt, durch die zum Beispiel Schrauben geführt werden können, um die Andockstation 10 an einer Arbeitsstation 16 zu befestigen (siehe zum Beispiel Figuren 3a und 3b). Die Andockstation 10 weist ferner das lösbare Fixierelement 18 auf, das zum mechanischen Fixieren des mobilen Roboters 12 an der Andockstation 10 dient.

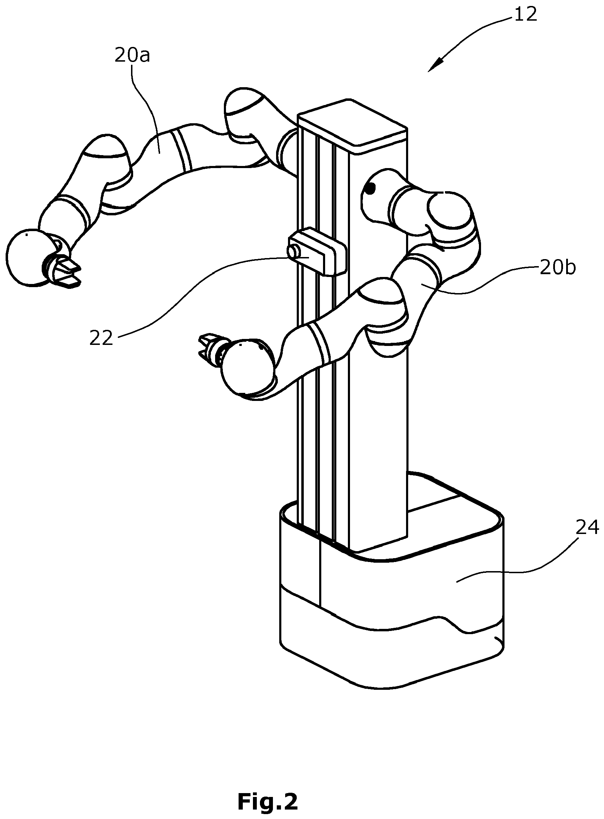

Eine mögliche Ausgestaltung eines mobilen Roboters 12 ist in Figur 2 dargestellt. Der Roboter 12 weist zwei Roboterarme 20a, 20b auf und ist ferner mit einem korrespondierenden Fixierelement 22 ausgestattet, das entsprechend zu dem lösbaren Fixierelement 18 der Andockstation 10 ausgebildet ist. Insbesondere weist dieses Fixierelement 22 des mobilen Roboters 12 eine Außenkontur auf, die einer Außenkontur des Fixierelement 18 an der Andockstation 10 entspricht. Der mobile Roboter 12 weist ferner einen Roboterfuß 24 auf, der jedoch weniger voluminös und schwer als bei üblichen Robotersystemen ausgebildet sein muss.

Eine beispielshafte Arbeitsstation 16 ist aus zwei verschiedenen Blickwinkeln in Figuren 3a und 3b dargestellt. An dieser sind beispielhaft mehrere Andockstationen 10 befestigt, an denen der mobile Roboter 12 befestigt werden kann.

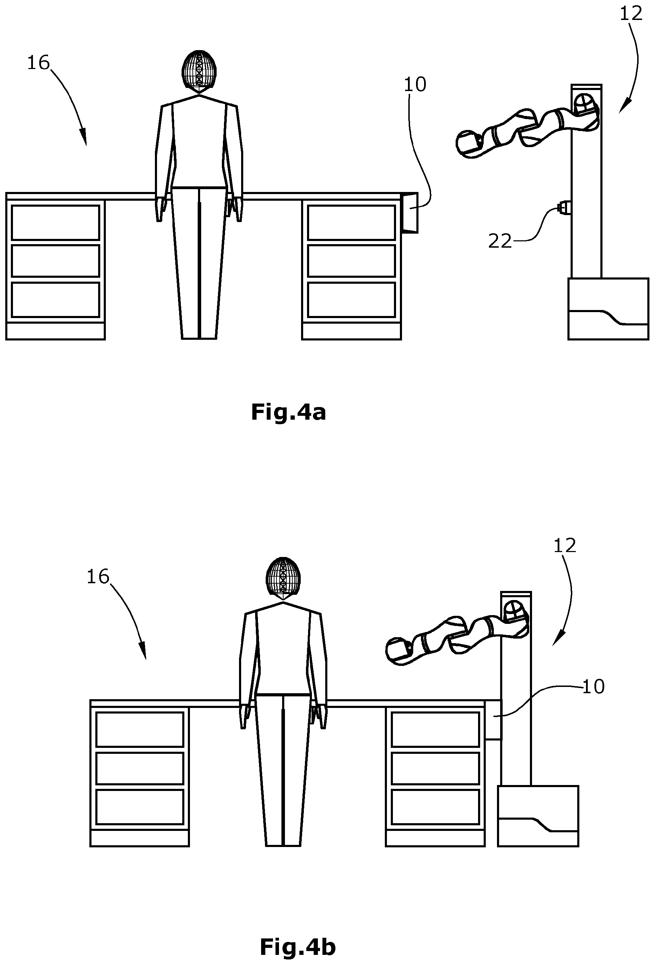

Der Andockvorgang des mobilen Roboters 12 an die mobile Andockstation 10 ist in den Figuren 4a und 4b dargestellt. Hier ist sichtbar, wie das Fixierelement 22 des mobilen Roboters 12 in das Fixierelement 18 der Andockstation 10 eingeführt wird. Hiernach kann die Einrichtung des Roboterarbeitsplatzes inklusiv der Kalibration und/ oder Registrierung des mobilen Roboters 12 automatisch erfolgen.

## Patentansprüche

1. Andockstation (10) für mobile Roboter (12), wobei die Andockstation (10) aufweist:
- mindestens ein Befestigungselement (14, 14a - 14d) zum Befestigen der Andockstation (10) an einer Arbeitsstation (16)
- ein lösbares Fixierelement (18) zum Fixieren des mobilen Roboters (12) an der Andockstation (10) und damit an der Arbeitsstation (16).

2. Andockstation gemäß Anspruch 1, **dadurch gekennzeichnet, dass** nach dem Fixieren des mobilen Roboters (12) an der Andockstation (10) dieser relativ zur Arbeitsstation (16) nicht mehr bewegbar ist.

3. Andockstation nach Anspruch 1 oder 2, **gekennzeichnet durch** eine Datenschnittstelle zum Übertragen von Daten von der Andockstation (10) an den mobilen Roboter (12).

4. Andockstation nach einem der Ansprüche 1 - 3, **gekennzeichnet durch** eine Energiezuführvorrichtung zum Zuführen insbesondere elektrischer Energie zum mobilen Roboter (12).

5. Andockstation nach einem der Ansprüche 1 - 4, **dadurch gekennzeichnet, dass** die Arbeitsstation (16) Sensoren aufweist, deren Sensordaten insbesondere über die Andockstation (10) an den mobilen Roboter (12) übermittelbar sind.

6. Verfahren zum Betreiben eines mobilen Roboters (12), mit dem folgenden Verfahrensschritt:
- Andocken des mobilen Roboters (12) an einer an einer Arbeitsstation (16) befestigten Andockstation (10), die nach einem der Ansprüche 1 bis 5 ausgebildet ist.

7. Verfahren nach Anspruch 6, **gekennzeichnet durch** die zusätzlichen Schritte:
- Erfassen von Sensordaten **durch** an der Arbeitsstation (16) angeordnete Sensoren,
- Übermitteln dieser Sensordaten, insbesondere über die Andockstation (10) an den mobilen Roboter (12).

8. Verfahren nach Anspruch 6 oder 7, **gekennzeichnet durch** den zusätzlichen Schritt:
- Übertragen von Informationen über das Weltmodell der Arbeitsstation (16) über die Andockstation (10) an den mobilen Roboter (12).

9. Verfahren nach Anspruch 8, **dadurch gekennzeichnet, dass** die an den mobilen Roboter (12) übermittelten Informationen eine kartesische Position der Arbeitsstation (16), eine kartesische Position eines zu bearbeitenden Projekts und/ oder eine kartesische Position von Hindernissen sind, mit denen der mobile Roboter (12) nicht kollidieren darf.

10. Verfahren nach einem der Ansprüche 6 - 9, **gekennzeichnet durch** den zusätzlichen Schritt:
Übertragen von Informationen von der Arbeitsstation (16) über die Andockstation (10) an den mobilen Roboter (12), die dem mobilen Roboter (12) selbst nicht zur Verfügung stehen und die dieser für seinen Betrieb benötigt.
